# EUROPEAN PATENT APPLICATION

(11) **EP 4 006 336 A1**
(43) Date of publication of application: **01.06.2022**
(21) Application number: 20209748.1
(22) Date of filing: 25.11.2020
(51) Int. Cl.: F03D 7/02, F03D 7/04

(54) **WIND TURBINE ROTOR BLADE**

(71) Applicant: Siemens Gamesa Renewable Energy A/S, 7330 Brande (DK)
(72) Inventor: Junca, Guillem, 7100 Vejle (DK)
(74) Representative: Aspacher, Karl-Georg

(57) **Abstract**

The invention describes a wind turbine rotor blade (20) comprising a deformation arrangement (1), which deformation arrangement (1) comprises a plurality of linear actuators (11), wherein each linear actuator (11) is arranged at the suction side (20S) of the rotor blade (20), wherein a longitudinal axis (11A) of an linear actuator (11) is aligned with a longitudinal axis of the rotor blade (20), and wherein each linear actuator (11) is realised to alter its length in response to an excitation signal (100); and an interface (10) configured to receive a corrective control signal (320) and to issue excitation signals (100) to the linear actuators (11) on the basis of the corrective control signal (320). The invention further describes a wind turbine (2) and a method of operating a wind turbine (2).

## Description

The invention describes a wind turbine rotor blade, a wind turbine, and a method of operating a wind turbine.

### Background

Horizontal-axis wind turbines with long rotor blades must implement some measure of preventing collisions between the rotor blades and the tower. It is usual for rotor blades to undergo some amount of flap-wise bending as a result of wind loading. However, high wind loading from wind gusts or turbulence may result in severe deflection of a rotor blade in the downwind direction, i.e. in the direction of the tower.

The downwind deflection of a rotor blade may be understood as the change in blade tip position relative to its unloaded state, in the direction of the tower. For a rotor blade with a length in the order of 100 m, a downwind deflection in the range of 12 m may be regarded as acceptable, whereas any downwind deflection beyond 15 m may be regarded as severe.

A severely deflected rotor blade may collide with the tower as it passes through the "six o'clock" position. This can be avoided for example by manufacturing "pre-bent" rotor blades that curve into the upwind direction when there is no significant wind loading, and which "straighten out" under high wind loading. Another counter-measure is to construct the wind turbine so that its axis of rotation is tilted upwards from the horizontal, so that the rotor blades are given more clearance in the "six o'clock" position.

It is known to mitigate downward deflections of the rotor blades by adjusting the rotor blade pitch angles. However, the pitch angle is generally set so that the aerodynamic rotor can extract as much energy as possible from the wind. If the pitch angle is altered to turn the rotor blade out of the wind, the result is a decrease in rotational velocity of the aerodynamic rotor and a corresponding reduction in power output. This conventional approach is therefore regarded as an undesirable but necessary trade-off between damage prevention and power output.

Furthermore, each downwind deflection of the rotor blade results in compressive forces in the rotor blade shell on the suction side. A wind turbine rotor blade has a certain degree of flexibility, and is constructed to recover from intermittent elastic deformations. However, a rotor blade may undergo many thousands of severe deflections every year, and the resulting accruing of fatigue damage may significantly shorten the lifetime of the rotor blade. As a result, fatigue damage from downwind deflections of the rotor blades can contribute significantly to the overall cost of energy.

It is therefore an object of the invention to provide an improved way of mitigating the downwind deflection of a rotor blade.

This object is achieved by the wind turbine rotor blade of claim 1, the wind turbine of claim 10; and the method of claim 13 of operating a wind turbine.

### Description of the invention

According to the invention, the wind turbine rotor blade comprises a deformation arrangement, which deformation arrangement comprises a plurality of linear actuators, wherein each linear actuator is arranged at the suction side of the rotor blade, wherein a longitudinal axis - the "working axis" - of an linear actuator is essentially aligned along a longitudinal axis of the rotor blade, and wherein each linear actuator is realised to alter its length along its working axis in response to an excitation signal. The deformation arrangement further comprises an interface configured to receive a corrective control signal and to issue excitation signals to the linear actuators. The collective effect of adjusting the lengths of the linear actuators is to effect a deformation of the rotor blade to counteract a compression of the suction side. In this way, the inventive deformation arrangement can effect a counter-deformation of the rotor blade, correcting its shape towards the upwind direction.

An linear actuator in the context of the invention can be any suitable type of linear actuator, i.e. any actuator that can effect movement along a linear axis. The working length of the linear actuator can be adjusted relative to a default ("resting") length. Depending on its realisation, an linear actuator can alter its length in discrete steps or smoothly over a continuum.

In one approach, a linear actuator may be compressed when the rotor blade is deflected in the downwind direction, and this type of linear actuator may counteract the compression by extending to increase its length. In an alternative approach, a linear actuator may be stretched or extended when the rotor blade is deflected in the downwind direction, and this type of linear actuator may counteract the extension by contracting to reduce its length. In the following, without restricting the invention in any way, it shall be assumed for the sake of discussion that linear actuators of the first kind are used, i.e. linear actuators that counteract a compression by extending their lengths. It shall be understood that each linear actuator can be controlled to alter its length between a default length and a maximum extension length. The achievable extension will depend on the actual realisation of the linear actuator. The linear actuators may be identical (having the same extension range) or different (having different extension ranges).

A decision to adjust the lengths of the linear actuators can be made locally by the wind turbine controller, or can be made at a remote location, for example by a wind park controller.

An advantage of the inventive rotor blade is that it can easily modify its shape to counteract a downwind deflection. As explained above, a flap-wise bending moment causes the rotor blade to deflect downwind, towards the tower. The action of extending the linear actuators introduces an axial force in the rotor blade. This axial force is offset from the elastic axis of the rotor blade and therefore causes a bending moment in the opposite direction to the flap-wise moment, i.e. in the upwind direction, thereby bending the rotor blade away from the tower.

The inventive rotor blade allows the extent of deflection to be controlled directly, without any need of modifying the pitch angle. Excessive downwind deflection can therefore be avoided without any reducing power production.

The components of the deformation arrangement are chosen according to the physical properties of the rotor blade, for example its elasticity, its mass, its length, etc.

According to the invention, the wind turbine comprises a number of such rotor blades, usually three, mounted to a hub or spinner. The wind turbine comprises a monitoring arrangement that is realised to determine the extent of downwind deflection of a rotor blade from wind loading; and an analysis unit configured to determine a corrective deformation of that rotor blade to counteract the downwind deflection and to generate a corresponding corrective control signal to the deformation arrangement of that rotor blade.

The inventive wind turbine can continue to deliver optimum output power even during unfavourable wind conditions such as a high-speed gusts or turbulence, since it is not necessary to pitch the rotor blades out of the wind. Furthermore, the rotor blades of the inventive wind turbine can be protected from fatigue damage arising from vortex-induced vibrations during a stand-still mode. The monitoring arrangement can determine the frequency and amplitude of the vortex-induced vibrations, and the analysis unit can determine a corrective deformation to be effected in each "downwind" half-cycle of the vortex-induced vibrations.

The inventive method of operating such a wind turbine comprises the steps of determining an actual or predicted downwind deflection of a rotor blade from wind loading; determining the magnitude of a length correction to be effected by the deformation arrangement of that rotor blade to counteract the downwind deflection; generating a corrective control signal on the basis of the corrective force magnitude; and issuing the corrective control signal to the deformation arrangement of that rotor blade.

The inventive method provides a straightforward solution to actively deform the rotor blade in order to compensate for an unwanted deflection due to external loading. The inventive method can be deployed in different situations, for example by actively deflecting the rotor blade in the upwind direction during normal operation in order to prevent a collision between the rotor blade tip and the tower; or in a stand-still mode to counteract vortex-induced vibrations of the rotor blades by actively deflecting a rotor blade in the upwind direction to counteract a downwind deflection.

Particularly advantageous embodiments and features of the invention are given by the dependent claims, as revealed in the following description. Features of different claim categories may be combined as appropriate to give further embodiments not described herein.

The outboard region of a rotor blade may be understood herein to loosely refer to the outer half of the rotor blade, while the inboard region may be understood to include the rest. The expression "root region" may be understood to comprise the cylindrical root end, and the "transition region" refers to the region between the cylindrical root end and the airfoil. The term "outboard end" of an object is the end that is closer to the rotor blade tip, and its "inboard end" is the end that is closer to the rotor blade root.

In the context of an linear actuator, the terms "first end", "inboard end" and "inner end" are regarded as synonyms and may be used interchangeably herein. Similarly, the terms "second end", "outboard end" and "outer end" are regarded as synonyms and may be used interchangeably herein.

In the following, it may be assumed that the wind turbine is the conventional type described above, with three rotor blades mounted to a hub. The rotor blades may have been manufactured with a "pre-bent" design, i.e. having an inherent curvature in the upwind direction.

The inventive wind turbine may determine the downwind deflection of a rotor blade in various ways. For example, a rotor blade may be equipped with strain sensors in or on its outer shell or body. Such strain sensors can detect whether the shell is undergoing compression or extension, as will be known to the skilled person. Alternatively or in addition, the flap-wise flexion of the rotor blade under wind loading may be known, i.e. the relationship between wind speed and deflection is well-defined, so that a value of wind speed may be sufficient to determine the degree of downwind deflection. The angular position (or "azimuth angle") of the rotor blade may also be taken into consideration, since wind shear results in greater deflection of a rotor blade at the "12 o'clock" position (azimuth angle is 0°) compared to a rotor blade at the "6 o'clock" position" (azimuth angle is 180°).

As mentioned above, an linear actuator can be any suitable type of linear actuator. For example, an linear actuator can be any of a piezoelectric motor transducer, a hydraulic cylinder, a pneumatic cylinder, an electro-mechanical actuator, etc. Combinations of these different types of linear actuators are also possible. However, to simplify control of the actuators, in a preferred embodiment of the invention all liner actuators are of the same type, for example all linear actuators are piezoelectric motor transducers.

Preferably, a linear actuator is realised to extend its length by about 0.1% of its resting or default length. For example, a linear actuator can be a piezoelectric motor transducer with a length of 100 mm and a free deflection of up to 100 pm. Such piezoelectric linear actuators may be realised to achieve a push force capacity in the order of 100 kN. The strain in the shell of a rotor blade undergoing downwind deflection can be in the order of 10⁻³ m/m, and the choice of piezoelectric linear actuator will depend on its push force (or pull force) capacity, which should not exceed the strain in the rotor blade shell.

Preferably, all components of the deformation arrangement of a rotor blade are arranged in the interior of that rotor blade. The arrangement of linear actuators is anchored in some suitable manner to the body of rotor blade in order to be able to counteract a compression in the downwind direction. In a particularly preferred embodiment of the invention, a linear actuator is at least partially embedded in the body or shell of the rotor blade. For example, a linear actuator may have anchors in the form of a rigid outboard end plate and a rigid inboard end plate. These end plates may be embedded at least partially in the body of the suction side half of the rotor blade. In an embodiment using piezoelectric motor transducers, the active portion of the transducer is located between the end plates.

Preferably, the linear actuators are deployed in a region further outboard than the first 20% of the rotor blade length, since the inner 20% of the rotor blade has a high inherent stiffness and generally does not undergo any significant compression through wind loading. The highest strain (from rotor blade deflection) is typically produced over 20% - 50% of the rotor blade length. However, the effectiveness of a linear actuator is in direct proportion to its vicinity to the inboard blade region, i.e. the effectiveness of a linear actuator placed close to the root end is greater than an equivalent linear actuator placed further outboard.

Various possible arrangements of linear actuators are conceivable. In a preferred embodiment of the invention, a deformation arrangement comprises a series of linear actuators. For example, a plurality of linear actuators can be installed in the rotor blade over 40% - 80% of the rotor blade length. In one exemplary realisation, 50 linear actuators can be installed over a length of 50 m, each linear actuator having an extension range of 1 mm. In such an embodiment, a linear actuator can be realised as a stack of smaller piezoelectric "cells". With an appropriate choice of linear actuator, such an arrangement can counteract a severe downwind deflection of that rotor blade type.

With the components arranged as described above, the deformation arrangement can alter the deflection of the rotor blade, counteracting a downwind deflection and effecting an extension towards the upwind direction. Extending the lengths of the linear actuators will cause the rotor blade to bend flap-wise in the upwind direction. Decreasing the lengths of the linear actuators (towards their default state) will decrease the upwind deflection. Preferably, the net effect of the deflection arrangement is to reduce the downwind compression of the rotor blade to an acceptable level.

When multiple linear actuators of the same type are used, the effort to counteract the downwind compression can be evenly distributed, so that each linear actuator makes the same contribution. Alternatively, linear actuators with different capabilities may be installed in different regions of the rotor blade. For example, one or more primary arrangements of more powerful linear actuators may be installed in a rotor blade region that generally undergoes significant compression, and one or more secondary arrangements of less powerful linear actuators may be installed in regions that generally undergo less compression.

The analysis unit of a control arrangement can determine a corrective suction-side "length extension" to be effected for three rotor blades in order to counteract the suction-side compression, whereby the term "length extension" shall be understood to mean the collective length by which the linear actuators of a deformation arrangement must be extended in order to counteract the suction-side downwind compression. However, as explained above, wind shear and rotor blade angular position can determine the amount of downwind deflection during normal operation of the wind turbine, as well as during a stand-still mode. Therefore, in a particularly preferred embodiment of the invention, the analysis unit of the control arrangement is configured to determine a corrective "length extension" for each deformation arrangement independently. A 100 m rotor blade near the "six o'clock position" may require a corrective length extension of 5 cm, for example, while the same rotor blade near the "twelve o'clock position" may not require any corrective action. Of course, the corrective length extension depends on many factors such as rotor blade length, wind speed, wind shear, etc.

During mild wind conditions in normal operation of the wind turbine, downwind deflection of the rotor blades is generally not severe and no correction need be necessary. Therefore, in a preferred embodiment of the invention, the step of computing a corrective suction side length extension is carried out in unfavourable wind conditions, for example when the wind speed exceeds a minimum threshold, during turbulence, or during high-speed gusts. During a stand-still mode (the wind turbine is not generating output power, and the aerodynamic rotor does not turn or turns only very slowly), the step of computing a corrective suction side length extension may only be necessary if vortex-induced vibrations are causing downwind deflection of the rotor blades.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a wind turbine;
Figure 2 illustrates deflection of a rotor blade;
Figure 3 shows a schematic of a rotor blade according to the invention;
Figure 4 shows a block diagram of a control arrangement in an embodiment of the inventive wind turbine;
Figure 5 shows curves associated with the inventive rotor blade during normal operation;
Figure 6 shows curves associated with a conventional rotor blade during normal operation;
Figure 7 and Figure 8 show embodiments of the inventive rotor blade;
Figure 9 and Figure 10 show exemplary implementations of a linear actuator in an embodiment of the inventive rotor blade.

In the diagrams, like numbers refer to like objects throughout. Objects in the diagrams are not necessarily drawn to scale.

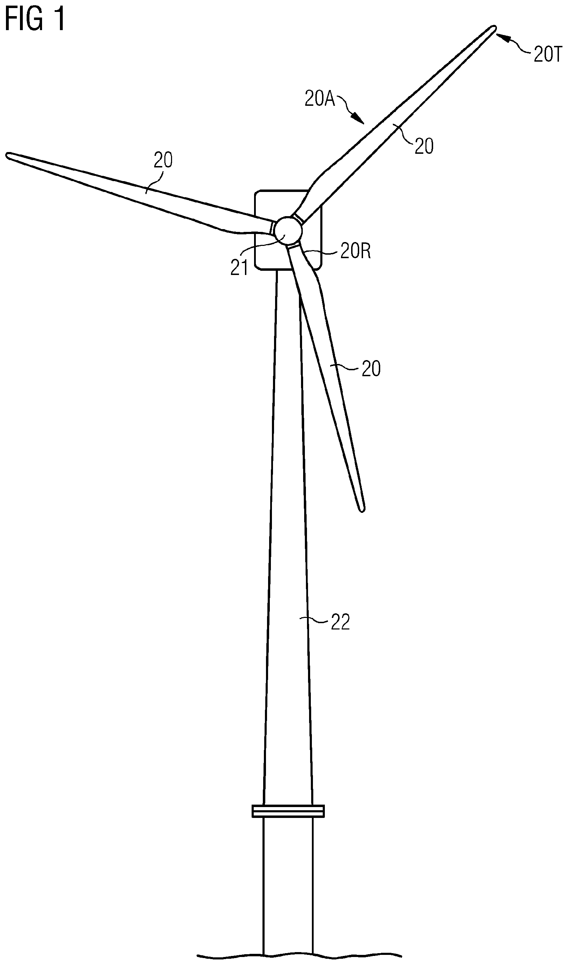

Figure 1 shows a wind turbine 2 of the most common type in use at present. The wind turbine 2 has an aerodynamic rotor comprising three rotor blades 20 attached to a hub 21. Rotation of the aerodynamic rotor causes rotation of a generator rotor, so that output power can be exported by the wind turbine 2.

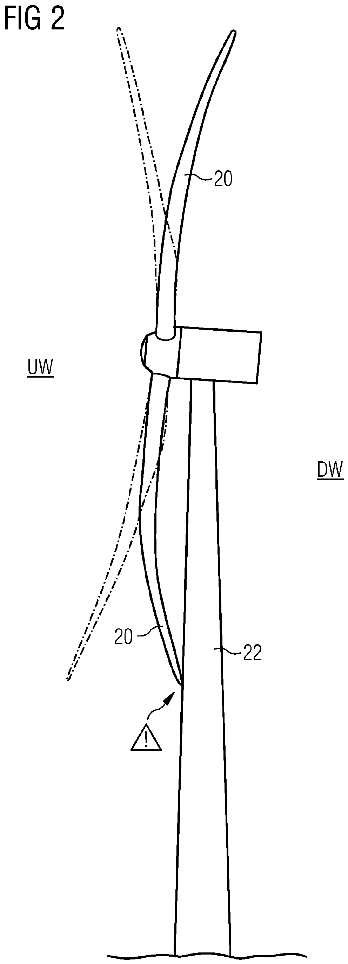

The rotor blades 20 are shaped to optimize the amount of energy that can be extracted from the wind. To this end, a rotor blade 20 has an airfoil portion over much of its length, and the shape of the rotor blade transitions from a generally circular shape at the root end 20R to the flatter airfoil portion 20A, ultimately tapering to a thin tip 20T. The length of a rotor blade can be in the order of 80 m or more. This type of rotor blade may undergo significant deflection in the downwind direction, as illustrated in Figure 2, which shows how the rotor blades 20 of such a wind turbine may be deflected by high wind loading in the downwind direction DW, i.e. in the direction of the tower 22. The downwind side DW and upwind side UW of the aerodynamic rotor are indicated. In this exemplary wind turbine, the axis of rotation is tilted upwards by several degrees and the rotor blades are pre-bent as indicated by the ghost outlines that show their "resting" shape in low wind conditions.

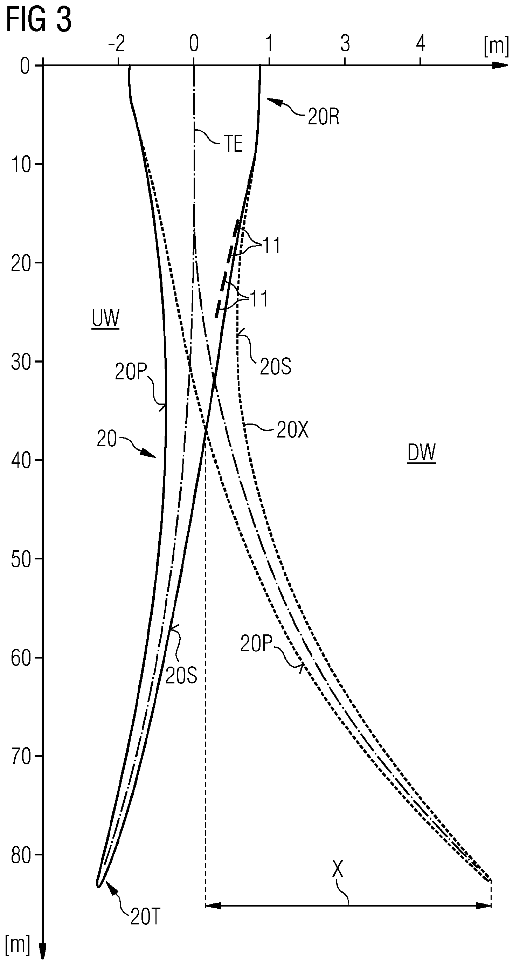

Figure 3 shows a schematic of a rotor blade according to the invention. The diagram is a view of the rotor blade looking at the trailing edge TE. It shall be noted that the axes are not to the same scale. The diameter at the root end 20R is in the order of 3 - 4 m (X-axis), and the rotor blade length is in the order of 80 - 90 m (Y-axis). The pressure side 20P and suction side 20S of the rotor blade 20 are shown as indicated. It shall be assumed that the wind turbine is controlled so that its aerodynamic rotor always faces upwind UW during normal operation.

The diagram shows a deflection shape (dotted line) to indicate the shape of an equivalent conventional rotor blade 20X under high wind conditions without corrective pitch control. Deflection can be measured from a reference, for example relative to a vertical line extending through 0 of the X-axis. The significant tip-to-tower deflection X of the conventional rotor blade 20X can have undesirable effects such as fatigue loading, tower collision, etc. For this reason, a conventional rotor blade is generally pitched out of the wind to decrease the tip-to-tower deflection X, resulting in a reduction in output power during normal operation.

In the inventive rotor blade 20, such extreme downwind deflection is prevented by its deformation arrangement, indicated here schematically to comprise a series of linear actuators 11 embedded at least partially at the suction-side 20S of the rotor blade 20. In this exemplary embodiment, a series of linear actuators is indicated at an inboard blade region. Each linear actuator may comprise a stack of piezoelectric cells, for example. In response to a corrective control signal, the linear actuators extend their lengths to counteract the downwind deflection, assisting the rotor blade 20 to return towards its normal shape, i.e. compression of the suction side is counteracted.

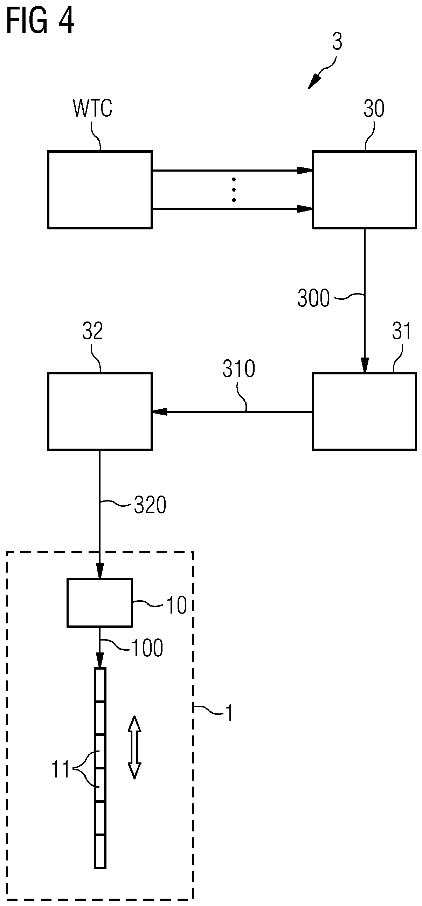

The corrective control signal 320 for the linear actuators can originate from an actuator control unit 32 as indicated in Figure 4, which shows a block diagram of a wind turbine control arrangement 3. In this exemplary embodiment, a monitoring arrangement 30 determines the downwind deflection 300 associated with the momentary wind loading on a rotor blade 20. The monitoring arrangement 30 may base its computations on relevant input variables such as wind speed, rotor blade angular position, rotor blade pitch angle etc., which can be supplied by the wind turbine controller WTC. An analysis unit 31 determines the magnitude of the length correction 310 that must be effected by the deformation arrangement 1 (indicated here only schematically) of that rotor blade in order to counteract the suction-side compression of the rotor blade. The analysis unit 31 may be provided with any relevant information such as the rotor azimuth angle, the rotor blade pitch angle, blade loading, a measurement of tip-to-tower clearance etc., which can be supplied by the wind turbine controller WTC. In one example, the monitoring arrangement 30 may determine that the current wind loading would result in a deflection of 3 m relative to a reference. The analysis unit 31, knowing the present state of the deformation arrangement 1, determines the "length correction" that will be required to counteract the longitudinal compression of the suction-side to avoid severe deflection. The actuator control unit 32 translates the length correction 310 into an appropriate actuator control signal 320 that is then issued to the linear actuators of the deformation arrangement 1 of that rotor blade. In this way, the control arrangement 3 mitigates, prevents or counteracts the downwind deflection of that rotor blade.

The exemplary control arrangement 3 described above comprises the monitoring arrangement 30, the analysis unit 31, and the actuator control unit 32. One or more components of the control arrangement can be realised locally in a wind turbine or at a remote location.

The computations described above can be carried out for all three rotor blades collectively, i.e. a single length correction 310 is determined and converted into a corrective actuator control signal 320 that is issued to the deformation arrangements of all three rotor blades. However, since the downwind deflection is affected by wind shear and angular rotor blade position, the downwind deflection 300, corrective lengths 310 and actuator control signals 320 can be computed independently for each rotor blade.

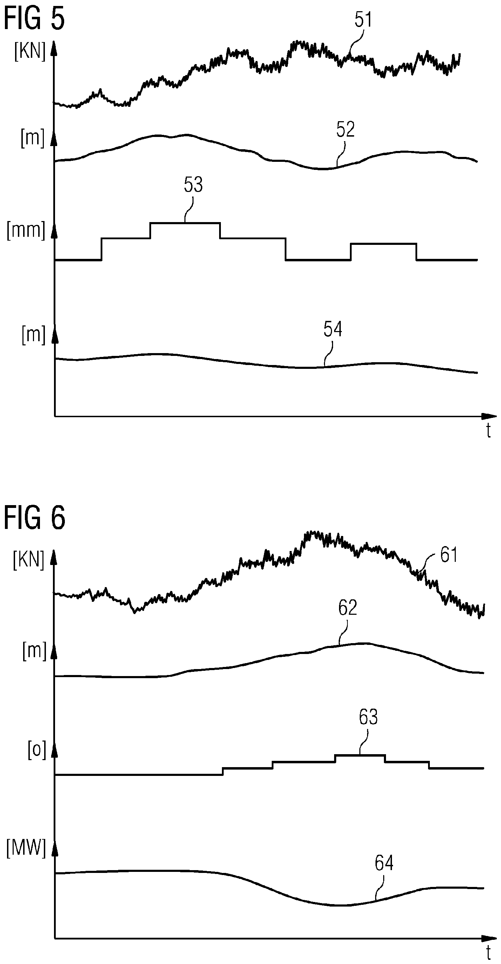

Since wind loading on the rotor blades will fluctuate, the corrective force magnitude 310 can fluctuate accordingly. This is indicated in Figure 5, which shows curves for wind load 51, predicted downwind deflection 52, corrective lengths 53 and actual downwind deflection 54 respectively for a rotor blade according to the invention. The diagram shows that corrective actuation of the linear actuators counteracts the suction-side compression and prevents significant downwind deflection. This pre-emptive or "counter-deformation" of the rotor blades means that the wind turbine controller does not need to adjust the pitch angle to avoid rotor blade damage, but can continue to operate at the favourable high power output. The pitch angle and power output can remain essentially constant. The predicted downwind deflection 52 may correspond to the output of the monitoring arrangement 30, and the corrective lengths 53 may correspond to the output 310 of the analysis unit 31 as explained in Figure 4 above.

The conventional approach of adjusting the pitch angle to mitigate downwind deflection is illustrated in Figure 6, which shows curves for wind load 61, downwind deflection 62, pitch angle correction 63 and power output 64 respectively. The diagram illustrates how downwind deflection can only be avoided by adjusting the rotor blade pitch angle, which in turn results in a decrease in output power.

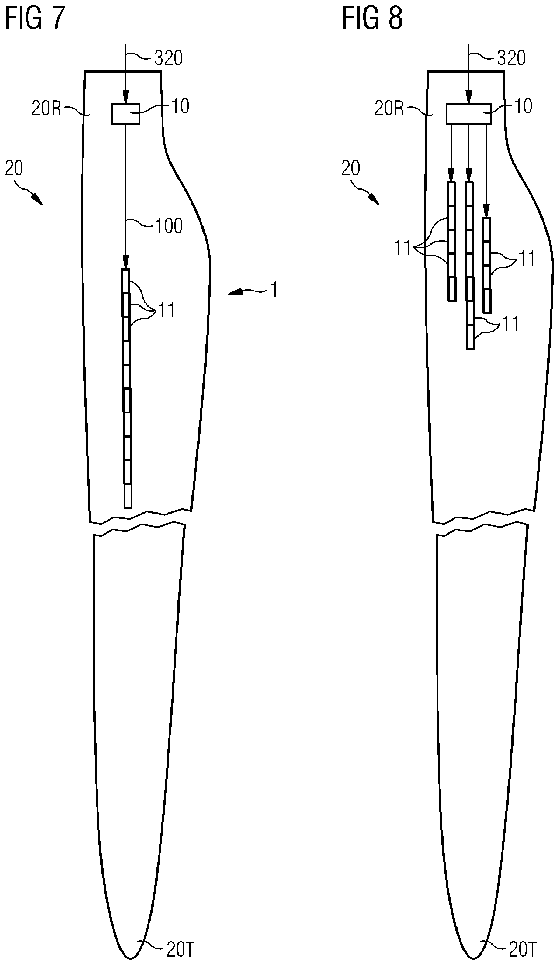

Figure 7 shows a schematic diagram of a possible embodiment of the inventive rotor blade 20, indicating the deformation arrangement 1 in the interior of the rotor blade. The diagram shows a series of linear actuators 11 arranged along an inboard region of the rotor blade 20. Each linear actuator 11 can comprise a stack of piezoelectric motor transducers that act together as a unit. Each linear actuator 11 may be assumed to be at least partially embedded in the suction-side body of the rotor blade. A length correction input 320 is converted to an appropriate excitation signal 100 by an interface module 10. For example, in an arrangement using ten piezoelectric units 11, each comprising a piezoelectric stack, a length correction input 320 corresponding to "3 cm" may be converted to a suitable input 100 voltage that causes each of the ten units 11 to extend its length by 3 mm.

Figure 8 shows a schematic diagram of another possible embodiment of the inventive rotor blade 20. Here, three series of linear actuators 11 is implemented, and each linear actuator can comprise a stack of piezoelectric motor transducers that act together as a unit. The units 11 may all be identical. Alternatively, each series may comprise units 11 of the same type, but units 11 of one series may differ from the units 11 of the other series.

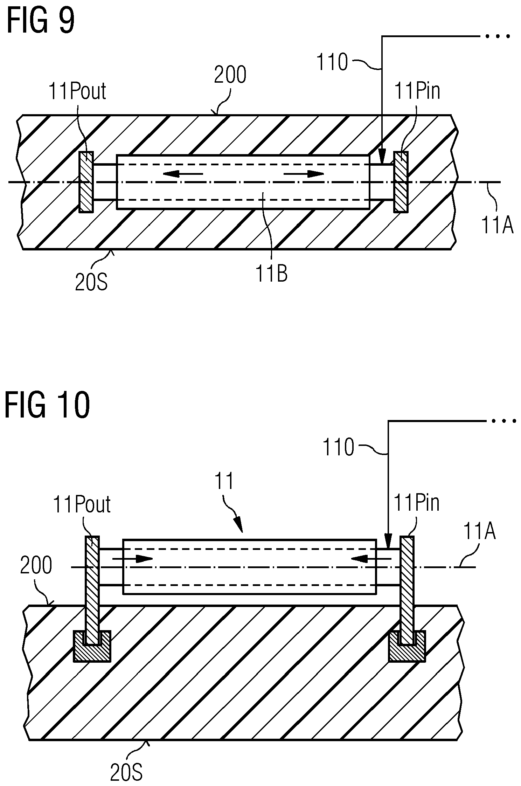

Figure 9 shows a very simplified exemplary embodiment in which a piezoelectric motor transducer 11 is embedded in the suction-side body 20S or shell of the rotor blade. The longitudinal axis 11A of the linear actuator is essentially in line with a longitudinal axis of the rotor blade. The linear actuator 11 has a rigid outboard end plate 11Pout and a rigid inboard end plate 11Pin. These end plates 11Pin, 11Pout are embedded in the suction-side body 20S and serve as anchors. The active portion 11B of the transducer is located between the end plates 11Pin, 11Pout. Depending on the magnitude of the input voltage 100, the active portion 11B of the transducer will extend or contract, as will be known to the skilled person. In this embodiment, the linear actuator is arranged in line with its anchors.

Figure 10 shows an alternative arrangement, in which the linear actuator is upwind of its anchors. In such an embodiment, compression of the suction side will extend or stretch the active portion of the linear actuator. Here, the linear actuator is configured with a negative free deflection, i.e. it will contract or reduce its length in response to a suitable input voltage.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A wind turbine rotor blade (20) comprising a deformation arrangement (1), which deformation arrangement (1) comprises
- a plurality of linear actuators (11), wherein each linear actuator (11) is arranged at the suction side (20S) of the rotor blade (20), wherein a longitudinal axis (11A) of an linear actuator (11) is aligned with a longitudinal axis of the rotor blade (20), and wherein each linear actuator (11) is realised to alter its length in response to an excitation signal (100); and
- an interface (10) configured to receive a corrective control signal (320) and to issue excitation signals (100) to the linear actuators (11) on the basis of the corrective control signal (320).

2. A wind turbine rotor blade according to claim 1, wherein linear actuator (11) is at least partially embedded in the body (20S) of the rotor blade (20).

3. A wind turbine rotor blade according to any of the preceding claims, wherein components (11, 10) of the deformation arrangement (1) are arranged to counteract a compression of the rotor blade (20) in a downwind direction (DW) .

4. A wind turbine rotor blade according to any of the preceding claims, wherein an linear actuator (11) is any of a piezoelectric motor transducer, a hydraulic cylinder, a pneumatic cylinder, an electro-mechanical actuator.

5. A wind turbine rotor blade according to any of the preceding claims, wherein an linear actuator (11) is realised to alter its length by up to 0.1% of its resting length.

6. A wind turbine rotor blade according to any of the preceding claims, comprising at least one series arrangement of linear actuators (11).

7. A wind turbine rotor blade according to claim 6, wherein a series arrangement comprises at least twenty linear actuators (11), more preferably at least forty linear actuators (11).

8. A wind turbine rotor blade according to any of the preceding claims, wherein linear actuators (11) are located in the vicinity of the rotor blade root region (20R).

9. A wind turbine rotor blade according to any of the preceding claims, wherein an linear actuator (11) comprises a number of attachment means (11Pin, 11Pout) for attaching the linear actuator (11) to the rotor blade body (20S).

10. A wind turbine (2) comprising
- a number of rotor blades (20) according to any of claims 1 to 9;
- a monitoring arrangement (30) realised to determine a downwind deflection (300) of a rotor blade (20) from wind loading;
- an analysis unit (31) configured to determine a corrective deformation (310) of that rotor blade (20) to counteract the downwind deflection and to generate a corresponding corrective control signal (320) to the deformation arrangement (1) of that rotor blade (20).

11. A wind turbine according to claim 10, configured to determine a corrective deformation (310) for each rotor blade (20) independently.

12. A wind turbine according to any of claims 10 or 11, wherein each rotor blade (20) comprises an inherent curvature in the upwind direction.

13. A method of operating a wind turbine according to any of claims 10 to 12, which method comprises the steps of
- determining a downwind deflection (52) of a rotor blade (20) from wind loading (51);
- determining the magnitude of a corrective length to be effected by the deformation arrangement (1) of that rotor blade (20) to counteract the downwind deflection (52);
- generating a corrective control signal (320) on the basis of the corrective force magnitude (310); and
- issuing the corrective control signal (320) to the deformation arrangement (1) of that rotor blade.

14. A method according to claim 13, wherein the deflection of a rotor blade (20) is determined from a strain sensor arrangement and/or from a wind speed monitoring arrangement.

15. A method according to claim 13 or claim 14, wherein the step of computing a corrective force (310) is carried out when wind speed exceeds a minimum threshold.
